**Europäisches Patentamt**

**European Patent Office**

**Office européen des brevets**

(19)

(11) Veröffentlichungsnummer : **0 012 977**
**B1**

(12) **EUROPÄISCHE PATENTSCHRIFT**

(45) Veröffentlichungstag der Patentschrift :
13.01.82

(51) Int. Cl.³ : **H 04 B   3/46**

(21) Anmeldenummer : **79105230.1**

(22) Anmeldetag : **17.12.79**

(54) Schaltungsanordnung zur Ermittlung und Ortung von Fehlern in einem Übertragungssystem für pulscodemodulierte Signale.

(30) Priorität : **29.12.78 DE 2856679**

(43) Veröffentlichungstag der Anmeldung :
**09.07.80 (Patentblatt 80/14)**

(45) Bekanntmachung des Hinweises auf die Patenterteilung : **13.01.82 Patentblatt 82/02**

(84) Benannte Vertragsstaaten :
**AT BE CH FR GB IT LU NL SE**

(56) Entgegenhaltungen :
**US - A - 3 796 971**

**H.J.   HILDEBRANDT   « Trägerfrequenztechnik, 1975
R. OLDENBOURG VERLAG, München-Wien, Seiten 95-116**

(73) Patentinhaber : **SIEMENS AKTIENGESELLSCHAFT
Postfach 22 02 61
D-8000 München 22 (DE)**

(72) Erfinder : **Härle, Hans Georg, Dipl.-Ing.
Haldenweg 4
D-8901 Leitershofen (DE)**
Erfinder : **Dömer, Josef
Flossgatter 18
D-8021 Hohenschäftlarn (DE)**

EP 0 012 977 B1

Imprimerie Jouve, 18, rue St-Denis, 75001 Paris, France

Schaltungsanordnung zur Ermittlung und Ortung von Fehlern in einem Übertragungssystem für pulscodemodulierte Signale

Die Erfindung betrifft eine Schaltungsanordnung zur Ermittlung und Ortung von Fehlern in einem zwei Übertragungsrichtungen aufweisendem Übertragungssystem für pulscodemodulierte Signale mit zu prüfenden Zwischenstellen, die für jede Übertragungsrichtung jeweils einen automatischen aktiven Dämpfungsentzerrer und eine diesem im Signalweg vorgeschaltete Vorentzerrerstufe enthalten.

Durch die Pulscodemodulation ist es möglich, Nachrichtenübertragungssysteme mit einer sehr großen Geräuschunempfindlichkeit aufzubauen, da sich das ausgesendete Signal bis zu einem bestimmten Signalgeräuschabstand des Übertragungsweges beliebig oft in Zwischenstellen nahezu hundertprozentig regenerieren läßt. Diese Zwischenstellen sowie die Endämter enthalten in den Regeneratoren beispielsweise aktive Entzerrer, die die Dämpfung der Übertragungsstrecke ausgleichen. Diese Entzerrer setzen sich aus einem eingangsseitigen Festwertentzerrer und einem darauffolgenden automatischen Entzerrer zusammen und sind im Stande, große Regeneratorfeldlängen zu entzerren.

Um die Betriebsbereitschaft eines derartigen Nachrichtenübertragungssystems jederzeit sicherzustellen, ist es erforderlich, Fehler in den Zwischenstellen oder Endämtern mit Regeneratoren von wenigstens einer Endstelle aus zu orten. Dies ist insbesondere bei Zwischenstellen notwendig, die im allgemeinen schwer zugänglich im Boden untergebracht sind.

Zur Fehlerortung in PCM-Leitungssystemen wird entsprechend der DE-PS 23 58 272 das empfangene Impulsmuster des Fehlerortungssignales vom Ausgang des Regenerators der einen Richtung in den Eingang eines beispielsweise aus der DE-PS 23 18 246 hervorgehenden automatischen Dämpfungsentzerrers der Gegenrichtung eingeblendet und gleichzeitig das am Eingang der Gegenrichtung anliegende Empfangssignal abgetrennt (Schleifenschlußbetrieb). Dabei sollen alle aktiven Bauelemente in den Schleifenschlußweg einbezogen sein. Außerdem muß das Fehlerortungssignal durch Leitungsnachbildungen so geformt werden, daß der automatische Dämpfungsentzerrer bei Schleifenschlußbetrieb sich in etwa in Mitte seines Regelbereiches einstellt, was insbesondere bei modernen Systemen mit grossen Leitungslängen einen erheblichen Aufwand an Leitungsnachbildung mit sich bringt.

Aufgabe der Erfindung ist es, eine Schaltungsanordnung der eingangs erwähnten Art derart weiterzubilden, daß der Aufwand für die erforderliche Leitungsnachbildung im Fehlerortungssignalweg verringert werden kann.

Ausgehend von einer Schaltungsanordnung der einleitend geschilderten Art, wird diese Aufgabe erfindungsgemäß dadurch gelöst, daß die Vorentzerrerstufe als Hochpaß ausgebildet ist, daß dem Dämpfungsentzerrer im Signalweg ein aktiver Kompensationstiefpaß nachgeschaltet ist, der so bemessen ist, daß das Produkt der Übertragungsfunktionen des Hochpasses und des Kompensationstiefpasses eine Konstante darstellt, und daß dem Dämpfungsentzerrer beim Fehlerortungsbetrieb im Ortungssignalweg ein Ergänzungstiefpaß über einen zweiten Eingang vorgeschaltet ist, der so bemessen ist, daß sich zusammen mit dem Kompensationstiefpaß eine Leitungsnachbildúng entsprechend einer mittleren Kabellänge ergibt.

Besonders vorteilhaft ist hierbei, daß gemäß der Erfindung die dem Dämpfungsentzerrer im Signalweg nachgeschaltete Tiefpaßstufe derart bemessen ist, daß diese bei Schleifenschlußbetrieb bereits einen erheblichen Teil der Leitungsnachbildung übernimmt und im Leitungsentzerrer-Normalbetrieb das dem Dämpfungsentzerrer im Signalweg vorgeschaltete Hochpaßfilter bezüglich Dämpfung und Phase kompensieren kann. Das passive Hochpaßfilter verhindert weiterhin in vorteilhafter Weise, insbesondere bei kurzen Leitungslängen eine Übersteuerung der Eingangsstufe des Dämpfungsentzerrers an der unteren Regelgrenze des Entzerrers, so daß die durch den zur Wurzel aus der Frequenz proportionalen Dämpfungsgang des Übertragungsweges weniger gedämpften niederfrequenten und damit zu erheblichen Signalamplituden führenden Signalanteile keine Verzerrungen in der Eingangs-Verstärkerstufe verursachen. Durch die Doppelausnutzung der erwähnten Verstärkerstufe läßt sich so der Aufwand für die Fehlerortungssignalverarbeitung klein halten.

Weitere vorteilhafte Ausgestaltungen der Erfindung sind in den Unteransprüchen angegeben.

Anhand von Ausführungsbeispielen wird die Erfindung nachstehend noch näher erläutert.

Es zeigt in der Zeichnung :

Fig. 1  eine Blockschaltung des Dämpfungsentzerrers ;

Fig. 2  Bode-Diagramme des Hochpasses F1, des Kompensationstiefpasses F2, des Ergänzungstiefpasses F3 und der resultierenden Leitungsnachbildung durch den Kompensationstiefpaß und den Ergänzungstiefpaß ;

Fig. 3  eine Darstellung der Leitungsnachbildung im Ortungssignalweg ;

Fig. 4  eine Schaltungsanordnung für ein Ausführungsbeispiel ;

Fig. 5  weitere Realisierungsmöglichkeiten für den Kompensationstiefpaß.

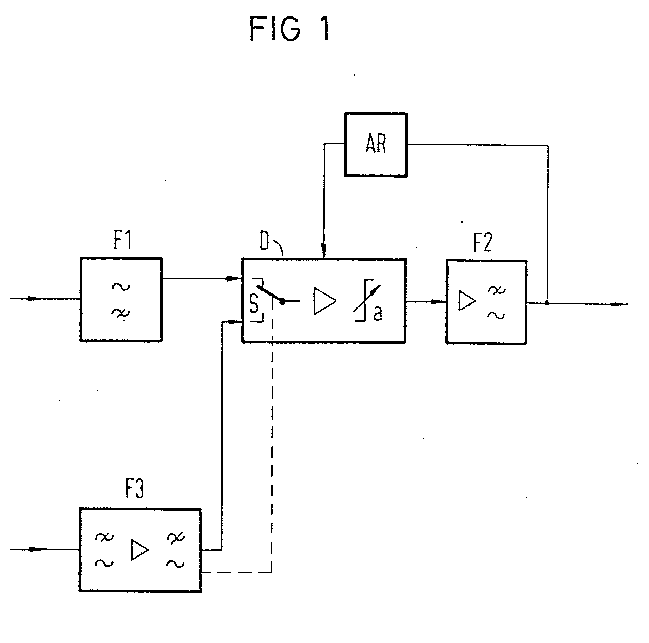

In Fig. 1 ist ein Prinzipschaltbild einer in den Zwischenstellen enthaltenen erfindungsgemäßen Schaltungsanordnung dargestellt. Dem automatischen Dämpfungsentzerrer D ist hierbei ein in den Signalweg eingefügter passiver Hochpaß F1 vorgeschaltet und ein Kompensationstiefpaß F2 im Signalweg nachgeschaltet, dessen Ausgang über einen Amplitudenregler AR mit einer Stufe des Dämpfungsentzerrers verbunden ist. Der automatische Dämpfungsentzerrer ist weiterhin eingangsseitig über eine in der Figur schematisch dargestellte Schalteranordnung S mit einem vom Ausgang des automatischen Dämpfungsentzerrers der Gegenrichtung kommenden Ortungssignalweg verbunden, in den ein Ergänzungstiefpaß F3 eingeschaltet ist.

Der passive Hochpaß F1 verhindert hierbei eine Übersteuerung der Eingangsstufe an der unteren Regelgrenze des Entzerrers, insbesondere bei kurzen Leitungslängen, so daß die wegen des zur Wurzel aus der Frequenz proportionalen Dämpfungsganges des Übertragungsweges weniger gedämpften niederfrequenten Signalanteile mit ihren erheblichen Signalamplituden keine Verzerrungen in der ersten Verstärkerstufe des Dämpfungsentzerrers verursachen. Weiterhin wird durch die passive Vorentzerrung der Feinblitzschutz der Einrichtung verbessert.

Um das Signal-Geräuschverhältnis des Dämpfungsentzerrers nicht zu verschlechtern, ist es erforderlich, daß der Vorentzerrer bei der Nyquistfrequenz eine möglichst geringe Dämpfung aufweist. Das Übertragungsverhalten des als Hochpaß F1 ausgeführten Vorentzerrers wird durch den als aktive Schaltung ausgeführten Kompensationstiefpaß F2 wieder rückgängig gemacht. Hierzu ist es erforderlich, daß das Produkt der Übertragungsfunktionen des Hochpasses F1 und des aktiven Kompensationstiefpasses F2 eine Konstante ergibt.

Im Normalbetrieb gelangt das Eingangssignal über den Hochpaß F1 zum automatischen Dämpfungsentzerrer D, der sich mit Hilfe des Amplitudenregelkreises AR an die vorgeschaltete Leitungslänge anpaßt. Im Fehlerortungsbetrieb, bei dem ein zweiter Eingang des Dämpfungsentzerrers über die Schalter anordnung S mit dem Ergänzungstiefpaß F3 und damit mit dem Ortungssignalweg verbunden ist, wird der Kompensationstiefpaß F2 durch den Ergänzungstiefpaß F3 zu einer Leitungsnachbildung entsprechend einer mittleren Kabellänge ergänzt.

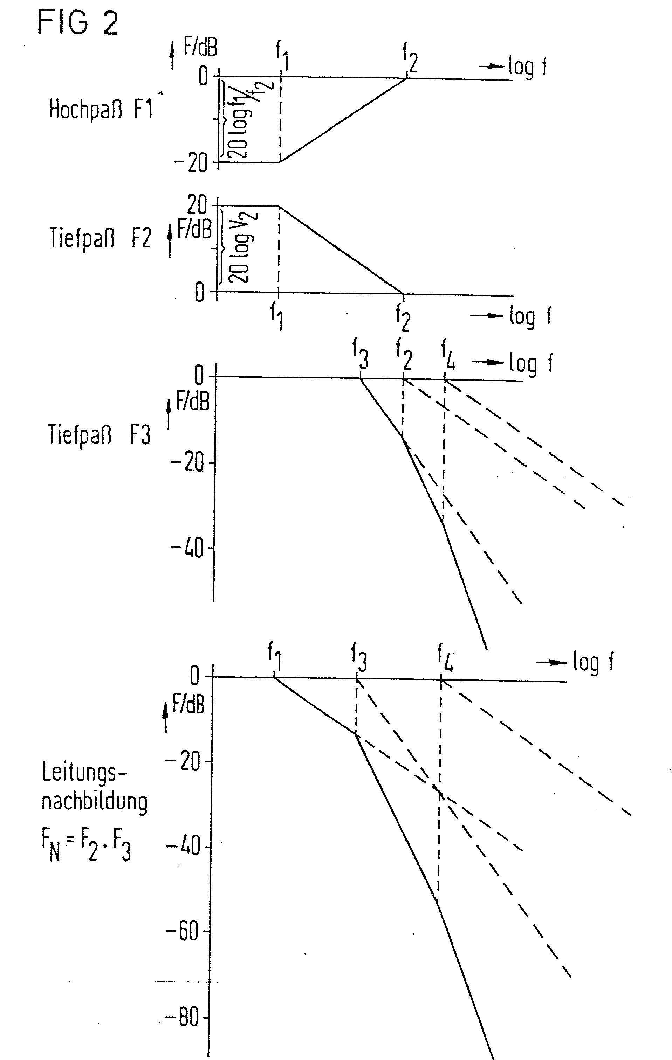

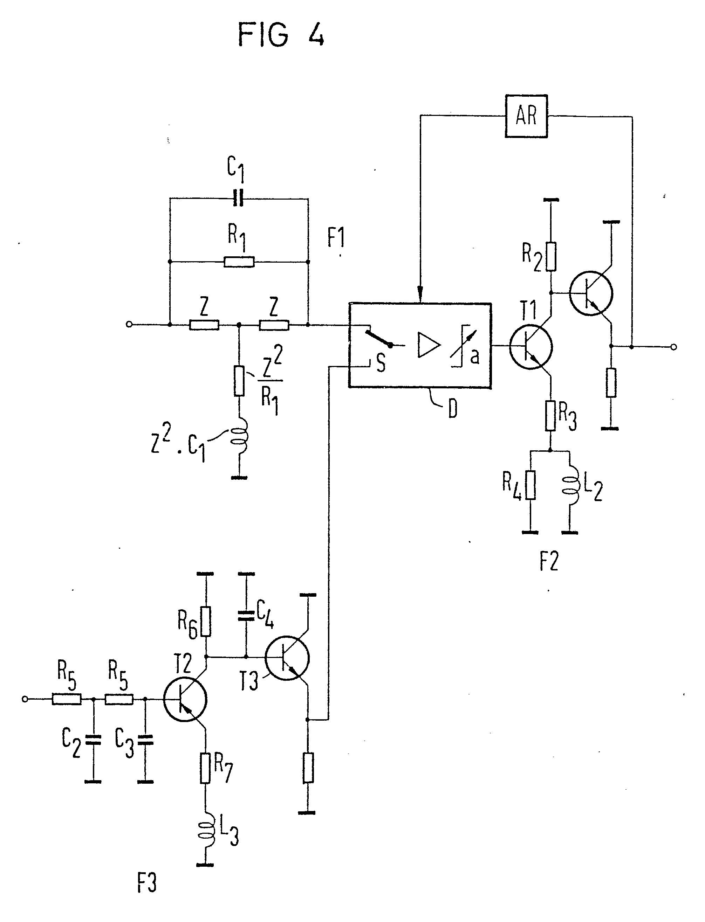

Beim Ausführungsbeispiel ist der Hochpaß F1 als in der Fig. 4 im einzelnen angegebenes überbrücktes T-Glied realisiert, das die in Fig. 2 in einem Bodediagramm dargestellte Übertragungsfunktion

$$F_1 = \frac{f_1}{f_2} \cdot \frac{1 + j\frac{f}{f_1}}{1 + j\frac{f}{f_2}}$$

aufweist. Die obere Eckfrequenz $F_2$ liegt beim Ausführungsbeispiel bei 4,5 MHz. Die Dämpfung $a_0$ bei der Nyquistfrequenz von 12,88 MHz ist dann mit einem Wert von 0,5 dB praktisch vernachlässigbar. Die untere Eckfrequenz $F_1$ ist mit 0,45 MHz so gewählt, daß bei einer Leitungslänge entsprechend einer Dämpfung von $a_0 = 54$ dB die Signalamplitude am Eingang des Entzerrers um etwa den Faktor 4 verringert wird, und dieselbe Eckfrequenz als Teil einer Leitungsnachbildung geeignet ist.

Zur Kompensation der Vorentzerrung durch den Hochpaß F1 ist der Kompensationstiefpaß F2 als aktiver Tiefpaß ausgeführt, dessen frequenzunabhängige Verstärkung ein Teil der Gesamtverstärkung des Dämpfungsentzerrers darstellt. Seine in der Fig. 2 im Bodediagramm dargestellte Übertragungsfunktion ist

$$F_2 = V_2 \cdot \frac{1 + j\frac{f}{f_2}}{1 + j\frac{f}{f_1}} = K \cdot \frac{1}{F_1} \cdot$$

Das Produkt der Übertragungsfunktion des Hochpasses F1 und des Kompensationstiefpasses F2 stellt damit also eine Konstante K dar.

Um im Fehlerortungsbetrieb den Kompensationstiefpaß F2 durch den Ergänzungstiefpaß F3 zu einer Leitungsnachbildung ergänzen zu können, muß die hierfür nicht benötigte Eckfrequenz $f_2$ kompensiert werden. Dies ergibt sich durch eine entsprechende Bemessung des Ergänzungstiefpasses, bei der dieser die folgende Übertragungsfunktion

$$F_3 = V_3 \cdot \frac{1}{\left[1 - \left(\frac{f}{f_3}\right)^2 + j2\zeta \cdot \frac{f}{f_3}\right] \cdot \left(1 + j\frac{f}{f_4}\right) \cdot \left(1 + j\frac{f}{f_2}\right)}$$

aufweist, wobei $V_3$ eine konstante Verstärkung, $\zeta$ den Dämpfungsgrad eines Verzögerungsgliedes zweiter Ordnung und $f_3$ und $f_4$ weitere Eckfrequenzen bedeuten, von denen die Eckfrequenz $f_3$ zwischen den Eckfrequenzen $f_1$ und $f_2$ und $f_4$ oberhalb der Eckfrequenz $f_2$ gelegen ist. Das Bode-Diagramm eines derartigen Ergänzungstiefpasses F3 ist in Fig. 2 dargestellt.

Die erzielte Leitungsnachbildung $F_N$ ergibt sich nunmehr aus dem Produkt der Übertragungsfunktionen des Kompensationstiefpasses F2 und des Ergänzungstiefpasses F3 zu $F_N = F_2 \cdot F_3$ mit

$$F_N = \text{const.} \cdot \frac{1}{\left(1 + j\frac{f}{f_1}\right) \cdot \left[1 - \left(\frac{f}{f_3}\right)^2 + j2\zeta \cdot \frac{f}{f_3}\right] \cdot \left(1 + j\frac{f}{f_4}\right)} \cdot$$

Das Bode-Diagramm einer solchen Leitungsnachbildung durch den Kompensations- und den Ergänzungstiefpaß ist in Fig. 2 dargestellt.

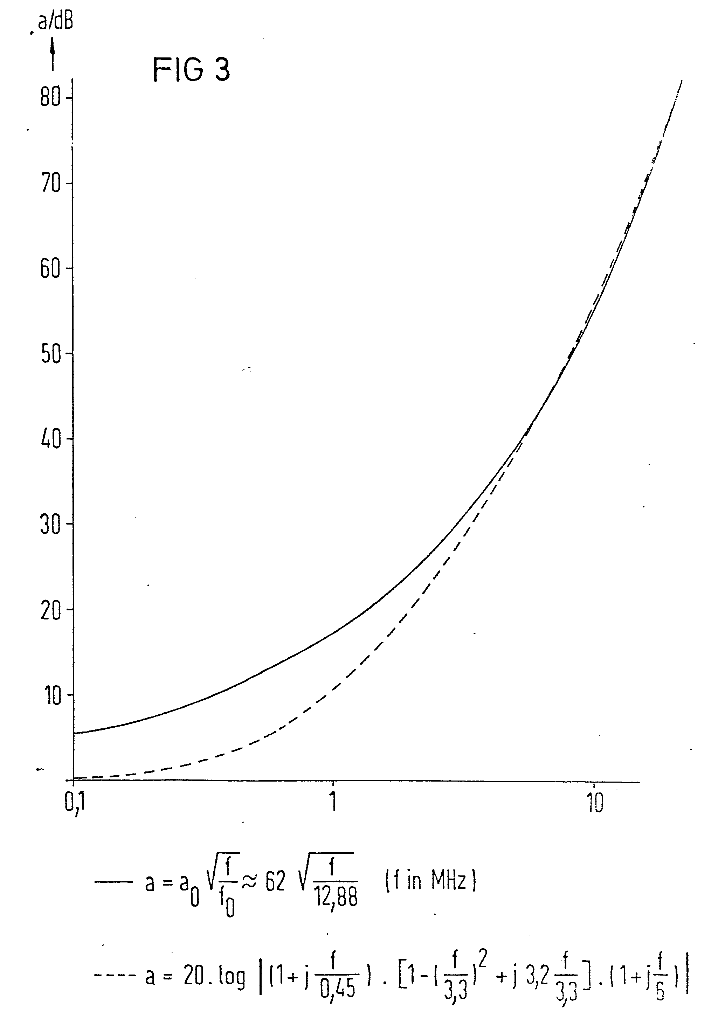

Fig. 3 zeigt die Dämpfungskurve der Leitungsnachbildung eines Ausführungsbeispiels mit den Eckfrequenzen $f_1 = 0{,}45$ MHz, $f_3 = 3{,}3$ MHz und $f_4 = 6$ MHz. Gleichzeitig ist in Fig. 3 die Dämpfung einer Leitung mit einer der Leitungsnachbildung entsprechenden Länge dargestellt.

Fig. 4 zeigt im einzelnen die Schaltungsanordnung eines realisierten Ausführungsbeispiels, wobei der automatische Dämpfungsentzerrer D als Block und die weiteren Schaltungseinheiten im Detail dargestellt sind.

Der Hochpaß F1 ist hierbei als überbrückte T-Schaltung aufgebaut, deren Längszweige die Widerstände Z enthalten, und deren Überbrückungszweig als Parallelschaltung eines Widerstandes $R_1$ und einer Kapazität $C_1$ aufgebaut ist. Der zum Überbrückungszweig duale Querzweig des T-Gliedes enthält die Serienschaltung aus einem Widerstand $\dfrac{Z^2}{R_1}$ und einer Induktivität $Z^2 \cdot C_1$. Damit hat der Hochpaß F1 die folgende Übertragungsfunktion

$$F_1 = \frac{Z}{Z + R_1} \cdot \frac{1 + j\omega C_1 R_1}{1 + j\omega C_1 \dfrac{R_1 . Z}{R_1 + Z}} = \frac{\omega_1}{\omega_2} \cdot \frac{1 + j\dfrac{\omega}{\omega_1}}{1 + j\dfrac{\omega}{\omega_2}}$$

$$\text{mit } 2\pi . f_1 = \omega_1 = \frac{1}{C_1 . R_1} \text{ und } 2\pi f_2 = \omega_2 = \frac{R_1 + Z}{C_1 . R_1 . Z}.$$

Der aktive Kompensationstiefpaß F2 enthält einen Transistor T1 mit einem Kollektorwiderstand $R_2$ und einem Emitterzweig, der als Serienschaltung aus einem unmittelbar mit dem Emitteranschluß verbundenen Widerstand $R_3$ und einer Parallelschaltung aus einem Widerstand $R_4$ und einer Induktivität $L_2$ aufgebaut ist. Der Kollektoranschluß des Transistors T1 kann unmittelbar über den Amplitudenregler AR mit dem Dämpfungsentzerrer D verbunden sein. Beim Ausführungsbeispiel ist zwischen dem Transistor T1 und dem Amplitudenregler AR noch eine weitere Transistorstufe in Emitterschaltung eingefügt. Es ergibt sich hiermit für den aktiven Kompensationstiefpaß F2 die folgende Übertragungsfunktion

$$F_2 = \frac{R_2}{R_3'} \cdot \frac{1 + j\omega\dfrac{L_2}{R_4}}{1 + j\omega L_2 \dfrac{R_3 + R_4}{R_3' . R_4}} = V_2 \cdot \frac{1 + j\dfrac{\omega}{\omega_2}}{1 + j\dfrac{\omega}{\omega_1}}$$

$$\text{mit } 2\pi . f_2 = \omega_2 = \frac{R_4}{L_2}; \quad 2\pi . f_1 = \omega_1 = \frac{1}{L_2} \cdot \frac{R_3' . R_4}{R_3' + R_4} \quad \text{und}$$

$R_3' = R_3 + R_e$ ; $R_e$ ist hierbei der innere Emitterwiderstand des Transistors

$$\frac{U_T}{I_c} \approx \frac{30 \text{ mV}}{I_c}.$$

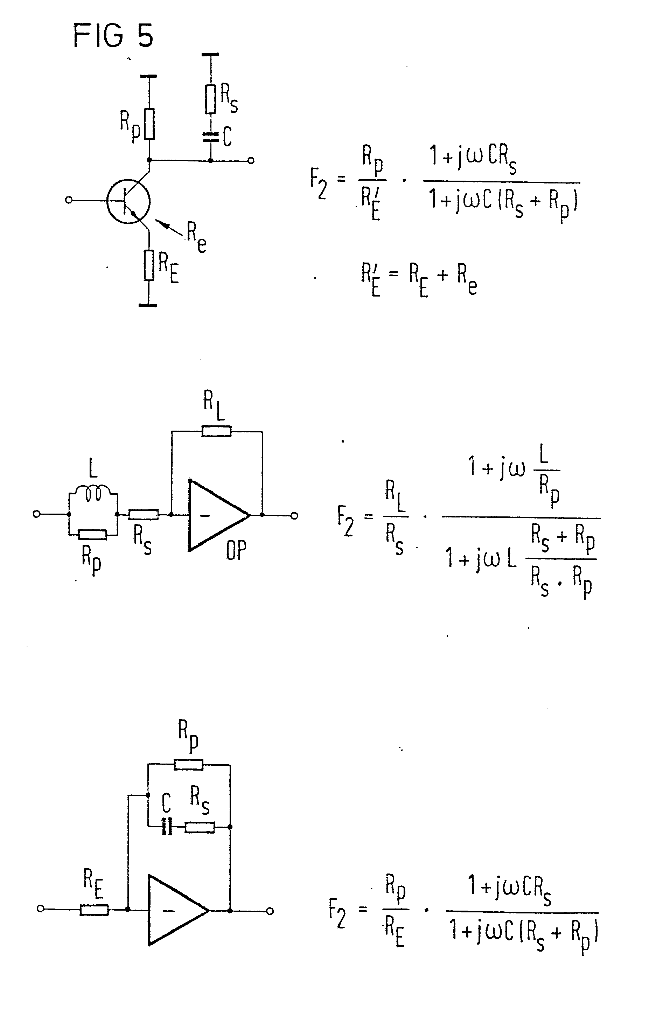

Weitere mögliche Schaltungen für den aktiven Kompensationstiefpaß und deren Übertragungsfunktionen sind in der Fig. 5 dargestellt.

Der Ergänzungstiefpaß F3 enthält nach Fig. 4 zwei Transistorstufen mit den Transistoren T2 und T3. Hierbei ist der Eingang des Ergänzungstiefpasses über eine Serienschaltung aus den beiden Widerständen $R_5$ mit dem gleichzeitig über eine Kapazität $C_3$ zur Masse führenden Basisanschluß des Transistors T2 verbunden. Eine weitere Kapazität $C_2$ ist zwischen dem Verbindungspunkt der beiden Widerstände $R_5$ und dem Masseanschluß angeordnet. Im Emitterzweig des Transistors T2 befindet sich eine Serienschaltung aus einem Widerstand $R_7$ und einer Induktivität $L_3$, während der Kollektorzweig die Parallelschaltung aus einem Widerstand $R_6$ und einer Kapazität $C_4$ enthält. Der Kollektoranschluß des Transistors T2 ist weiterhin mit dem Basisanschluß des Transistors T3 verbunden, dessen Kollektoranschluß auf Masse gelegt ist, und dessen Emitteranschluß unmittelbar mit dem für den Ortungssignalweg vorgesehenen Anschluß des Dämpfungsentzerrers D verbunden ist.

Es ergibt sich für den Ergänzungstiefpaß F3 hiermit die folgende Übertragungsfunktion:

$$F_3 = \frac{1}{1 - \omega^2 C_2 C_3 R_5^2 + j\omega R_5(C_2 + 2C_3)} \cdot \frac{1}{1 + j\omega C_4 R_6} \cdot \frac{R_6}{R_7'} \cdot \frac{1}{1 + j\omega \frac{L_3}{R_7'}}$$

$$= \text{const.} \frac{1}{1 - \left(\frac{\omega}{\omega_3}\right)^2 + j2\zeta \cdot \frac{\omega}{\omega_3}} \cdot \frac{1}{1 + j\frac{\omega}{\omega_4}} \cdot \frac{1}{1 + j\frac{\omega}{\omega_2}}$$

$$\text{mit } \omega_3 = \frac{1}{R_5\sqrt{C_2 C_3}}; \quad \omega_4 = \frac{1}{C_4 R_6}; \quad \omega_2 = \frac{R_7'}{L_3} \text{ mit}$$

$$R_7' = R_7 + R_e \text{ und } = \frac{1}{2}\frac{C_2 + C_3}{\sqrt{C_2 . C_3}}.$$

Weitere Realisierungsmöglichkeiten für den aktiven Kompensationstiefpaß zeigt Fig. 5. Die erste dort angegebene Schaltung ist dual zur Schaltungsanordnung nach Fig. 4 und als Transistorstufe aufgebaut, in derem Kollektorzweig die Parallelschaltung aus einem Widerstand $R_p$ und einer Serienschaltung aus einem Widerstand $R_s$ und einer Kapazität C enthalten ist. Die zweite Realisierungsmöglichkeit nach Fig. 5 ergibt sich durch die Verwendung eines Operationsverstärkers OP, dessen invertierendem Eingang eine Serienschaltung aus einem Widerstand $R_s$ und einer Parallelschaltung einer Induktivität L und eines Widerstandes $R_p$ vorgeschaltet ist. Zwischen dem Ausgang und dem invertierenden Eingang des Operationsverstärkers ist weiterhin ein Widerstand $R_L$ geschaltet. Eine hierzu duale Realisierungsmöglichkeit zeigt die dritte Anordnung nach Fig. 5, bei der dem invertierenden Eingang des Operationsverstärkers der Widerstand $R_E$ vorgeschaltet ist, und bei der in dem zwischen dem invertierenden Eingang und dem Ausgang des Operationsverstärkers liegenden Zweig eine Serienschaltung aus einer Kapazität C und einem Widerstand $R_s$ eingefügt ist, zu der parallel ein Widerstand $R_p$ geschaltet ist.

**Ansprüche**

1. Schaltungsanordnung zur Ermittlung und Ortung von Fehlern in einem zwei Übertragungsrichtungen aufweisenden Übertragungssystem für pulscodemodulierte Signale mit zu prüfenden Zwischenstellen, die für jede Übertragungsrichtung jeweils einen automatischen aktiven Dämpfungsentzerrer und eine diesem im Signalweg vorgeschaltete Vorentzerrerstufe enthalten, dadurch gekennzeichnet, daß die Vorentzerrerstufe als Hochpaß (F1) ausgebildet ist, daß dem Dämpfungsentzerrer (D) im Signalweg ein aktiver Kompensationstiefpaß (F2) nachgeschaltet ist, der so bemessen ist, daß das Produkt der Übertragungsfunktionen des Hochpasses (F1) und des Kompensationstiefpasses (F2) eine Konstante darstellt, und daß dem Dämpfungsentzerrer (D) beim Fehlerortungsbetrieb im Ortungssignalweg ein Ergänzungstiefpaß (F3) über einen zweiten Eingang vorgeschaltet ist, der so bemessen ist, daß sich zusammen mit dem Kompensationstiefpaß (F2) eine Leitungsnachbildung entsprechend einer mittleren Kabellänge ergibt.

2. Schaltungsanordnung nach Anspruch 1, dadurch gekennzeichnet, daß der Hochpaß (F1) als passives, überbrücktes T-Glied ausgebildet ist, das die Übertragungsfunktion

$$F_1 = \frac{f_1}{f_2} \cdot \frac{1 + j\frac{f}{f_1}}{1 + j\frac{f}{f_2}}$$

aufweist, wobei $f_1$ die untere Eckfrequenz und $f_2$ die obere Eckfrequenz im Bode-Diagramm bedeutet.

3. Schaltungsanordnung nach Anspruch 2, dadurch gekennzeichnet, daß der Kompensationstiefpaß (F2) die Übertragungsfunktion

$$F_2 = V_2 \frac{1 + j \cdot \frac{f}{f_2}}{1 + j \cdot \frac{f}{f_1}} = K \cdot \frac{1}{F_1}$$

aufweist, wobei $V_2$ eine konstante Verstärkung und K eine Konstante ist, und daß der Ergänzungstiefpaß (F3) die Übertragungsfunktion

$$F_3 = V_3 \cfrac{1}{\left[1 - \left(\dfrac{f}{f_3}\right)^2 + j2\zeta \cdot \dfrac{f}{f_3}\right] \cdot \left(1 + j\dfrac{f}{f_4}\right) \cdot \left(1 + j\dfrac{f}{f_2}\right)}$$

aufweist, wobei $V_3$ eine konstante Verstärkung, $\zeta$ den Dämpfungsgrad eines Verzögerungsgliedes zweiter Ordnung und $f_3$ unf $f_4$ weitere Eckfrequenzen im Bode-Diagramm bedeuten.

**Claims**

1. Circuit arrangement for the determination and location of faults in a transmission system, which has two transmission directions for pulse-code-modulated signals with intermediate stations which are to be checked and which for each transmission direction respectively contain an automatic, active attenuation equalizer and a preliminary equalizing stage which is connected preceding the equalizer in the signal path, characterised in that the preliminary equalizing stage is designed as high-pass filter (F1), that in the signal path, the attenuation equalizer (D) is followed by an active compensation low-pass filter (F2) which is so contrived that the product of the transmission functions of the high-pass filter (F1) and of the compensation low-pass filter (F2) is a constant, and that during the fault-locating operation, in the locating signal path, the attenuation equalizer (D) is preceded, via a second input, by an auxiliary low-pass filter (F3) which is so contrived that together with the compensation low-pass filter (F2) an equivalent network corresponding to a medium length cable is formed.

2. Circuit arrangement as claimed in claim 1, characterised in that the high-pass filter (F1) is designed as a passive, bridged T-element which exhibits the transmission function

$$F_1 = \frac{f_1}{f_2} \cdot \frac{1 + j\dfrac{f}{f_1}}{1 + j\dfrac{f}{f_2}}$$

where $f_1$ represents the lower cut-off frequency and $f_2$ the upper cut-off frequency in the Bode-diagram.

3. Circuit arrangement as claimed in claim 2, characterised in that the compensation low-pass filter (F2) exhibits the transmission function

$$F_2 = V_2 \frac{1 + j \cdot \dfrac{f}{f_2}}{1 + j \cdot \dfrac{f}{f_1}} = K \cdot \frac{1}{F_1}$$

where $V_2$ is a constant amplification and K a constant and that the auxiliary low-pass filter (F3) exhibits the transmission function

$$F_3 = V_3 \cfrac{1}{\left[1 - \left(\dfrac{f}{f_3}\right)^2 + j2\zeta \cdot \dfrac{f}{f_3}\right] \cdot \left(1 + j\dfrac{f}{f_4}\right) \cdot \left(1 + j\dfrac{f}{f_2}\right)}$$

where $V_3$ represents a constant amplification, $\zeta$ the attenuation ratio of a delay element of second order and $f_3$ and $f_4$ represent further cut-off frequencies in the Bode-diagram.

**Revendications**

1. Montage pour rechercher et localiser des défauts dans un système de transmission pour des signaux à modulation par impulsions et codage et présentant deux directions de transmission, du type à postes intermédiaires à contrôler comportant pour chaque direction de transmission un correcteur d'atténuation actif et automatique et un étage de pré-correction monté en aval de ce dernier dans la voie des signaux, caractérisé par le fait que l'étage de pré-correction est réalisé sous la forme d'un filtre passe-haut (F1), qu'en aval du correcteur d'atténuation (D) est monté, dans la voie des signaux, un filtre passe-bas actif de compensation (F2) qui est dimensionné de telle façon que le produit de la fonction de transfert du filtre passe-haut (F1) et du filtre passe-bas de compensation (F2) représente une constante, et qu'en amont du correcteur d'atténuation (D) est monté dans la voie des signaux de localisation, pendant

**0 012 977**

le fonctionnement pour la localisation des défauts et par une seconde entrée, un filtre passe-bas complémentaire (F3) qui est dimensionné de telle manière qu'il en résulte, avec le filtre passe-bas de compensation (F2), un équilibrage de ligne correspondant à une longueur de câble moyenne.

2. Montage selon la revendication 1, caractérisé par le fait que le filtre passe-haut (F1) est réalisé sous la forme d'un filtre en T ponté ayant une fonction de transfert

$$F_1 = \frac{f_1}{f_2} \cdot \frac{1 + j\frac{f}{f_1}}{1 + j\frac{f}{f_2}}$$

$f_1$ étant la fréquence limite inférieure et $f_2$ la fréquence limite supérieure dans le diagramme de Bode.

3. Montage selon la revendication 2, caractérisé par le fait que le filtre passe-bas de compensation (F2) a la fonction de transfert

$$F_2 = V_2 \frac{1 + j \cdot \frac{f}{f_2}}{1 + j \cdot \frac{f}{f_1}} = K \cdot \frac{1}{F_1}$$

$V_2$ étant une constante d'amplification et K une constante, et que le filtre passe-bas de compensation complémentaire (F3) a la fonction de transfert

$$F_3 = V_3 \frac{1}{\left[1 - \left(\frac{f}{f_3}\right)^2 + j2\zeta \cdot \frac{f}{f_3}\right] \cdot \left(1 + j\frac{f}{f_4}\right) \cdot \left(1 + j\frac{f}{f_2}\right)}$$

$V_3$ étant une constante d'amplification, $\zeta$ étant le degré d'atténuation des éléments de retard du second ordre et $f_3$ et $f_4$ étant d'autres fréquences limites du diagramme de Bode.

# FIG 1

**0 012 977**

FIG 2

Hochpaß F1

Tiefpaß F2

Tiefpaß F3

Leitungsnachbildung

$F_N = F_2 \cdot F_3$

2

FIG 3

$$a = a_0 \sqrt{\frac{f}{f_0}} \approx 62 \sqrt{\frac{f}{12,88}} \quad (f \text{ in MHz})$$

$$a = 20 \cdot \log \left| (1 + j\frac{f}{0,45}) \cdot \left[ 1 - (\frac{f}{3,3})^2 + j\, 3,2\,\frac{f}{3,3} \right] \cdot (1 + j\frac{f}{5}) \right|$$

FIG 4

## FIG 5

$$F_2 = \frac{R_p}{R_E'} \cdot \frac{1 + j\omega C R_S}{1 + j\omega C (R_S + R_p)}$$

$$R_E' = R_E + R_e$$

$$F_2 = \frac{R_L}{R_S} \cdot \frac{1 + j\omega \dfrac{L}{R_p}}{1 + j\omega L \dfrac{R_S + R_p}{R_S \cdot R_p}}$$

$$F_2 = \frac{R_p}{R_E} \cdot \frac{1 + j\omega C R_S}{1 + j\omega C (R_S + R_p)}$$